(19) **Europäisches Patentamt**

**European Patent Office**

**Office européen des brevets**

(11) **EP 0 852 058 B1**

(12) **EUROPÄISCHE PATENTSCHRIFT**

(45) Veröffentlichungstag und Bekanntmachung des Hinweises auf die Patenterteilung:
**26.01.2000 Patentblatt 2000/04**

(51) Int Cl.⁷: **G21C 17/10**, G21C 7/36

(21) Anmeldenummer: **96931811.2**

(86) Internationale Anmeldenummer:
**PCT/EP96/04058**

(22) Anmeldetag: **16.09.1996**

(87) Internationale Veröffentlichungsnummer:
**WO 97/11470 (27.03.1997 Gazette 1997/14)**

(54) **VERFAHREN ZUM ERFASSEN EINES STEUERELEMENTEINFALLS**

METHOD OF DETECTING A CONTROL ROD DROPPING INTO A NUCLEAR REACTOR

PROCEDE DE DETECTION DE LA CHUTE D'UN ELEMENT DE COMMANDE

(84) Benannte Vertragsstaaten:
**CH DE ES FR LI NL SE**

(30) Priorität: **20.09.1995 DE 19534952**

(43) Veröffentlichungstag der Anmeldung:
**08.07.1998 Patentblatt 1998/28**

(73) Patentinhaber: **SIEMENS AKTIENGESELLSCHAFT**
**80333 München (DE)**

(72) Erfinder:
- **KRIEN, Konrad**
  **D-91054 Erlangen (DE)**
- **WERNECKE, Bernd**
  **D-91056 Erlangen (DE)**

(56) Entgegenhaltungen:
**EP-A- 0 200 999    EP-A- 0 345 704**
**US-A- 4 548 784**

- **PATENT ABSTRACTS OF JAPAN vol. 014, no. 529 (P-1133), 20.November 1990 & JP,A,02 222890 (TOSHIBA CORP), 5.September 1990**
- **PATENT ABSTRACTS OF JAPAN vol. 015, no. 047 (P-1162), 5.Februar 1991 & JP,A,02 281197 (TOSHIBA CORP), 16.November 1990**
- **PATENT ABSTRACTS OF JAPAN vol. 010, no. 064 (P-436), 14.März 1986 & JP,A,60 205705 (MITSUBISHI DENKI KK), 17.Oktober 1985**
- **PATENT ABSTRACTS OF JAPAN vol. 009, no. 224 (P-387), 10.September 1985 & JP,A,60 082877 (TOSHIBA KK), 11.Mai 1985**

**Beschreibung**

Die Erfindung betrifft ein Verfahren zum Erfassen des Einfalls eines oder mehrerer Steuerelemente in einen Reaktorkern und eine Anordnung hierzu.

Kernreaktoren von Kraftwerken weisen zur Steuerung sogenannte Steuerelemente auf, die in den Reaktorkern hinein und aus ihm heraus gefahren werden können.

Ein besonders kritischer Fehlerfall ist dabei, wenn ein oder mehrere derartiger Steuerelemente in den Reaktorkern fehlerhaft einfallen (im Gegensatz zu einem gewollten Einfall, z.B. bei einer Schnellabschaltung). Der Reaktor kann dann nicht mehr optimal gesteuert werden. Es ergeben sich in einem solchen Fehlerfall bezüglich des Brennelementabbrands ungünstige Leistungsdichten und -verteilungen im Reaktorkern. Die Brennelemente sind dabei durch das Auftreten von Spitzenwerten besonders gefährdet.

Derartige Fehlerfälle sind im Hinblick auf den Betrieb des Reaktors und auf die Sicherheit des Kraftwerks sehr kritisch. Daher müssen fehlerhafte Einfälle von Steuerelementen in einem Reaktorkern schnell erkannt werden, damit geeignete Gegenmaßnahmen rechtzeitig eingeleitet werden können.

Prinzipiell kann der Einfall eines Steuerelements im Reaktorkern anhand der Auswirkungen auf die Signale der Reaktor-Instrumentierungen erkannt werden. Wegen der Vielzahl der Steuerelemente und der je nach Position unterschiedlichen Wirksamkeiten ist das Erkennen jedoch nicht einfach.

Zur Bestimmung der Leistung und/oder der Leistungsdichte sind im oder außerhalb des Reaktorkerns eine geeignete Anzahl von vertikal angeordneten Detektorgruppen vorgesehen. In der Regel geben diese Detektoren beim Passieren eines oder mehrerer Steuerelemente jeweils ein Signal ab, das eine Flanke aufweist.

Bisher wurden in der Praxis die Signale einer Detektorgruppe (je Steuerelement oder Steuerelementgruppe) zunächst differenziert (um einen Impuls zu erhalten) und anschließend summiert, so daß ein Gesamtsignal über den Steuerelementeinfall vorlag. Es hat sich jedoch gezeigt, daß dieses Summensignal insbesondere wegen des Signalrauschens nicht in allen Fällen für eine zuverlässige Fehlererkennung geeignet war.

Aus dem Dokument US-PS 4,548,784 ist in Zusammenhang mit der Leistungssteuerung eines Kernreaktors ein Verfahren zum Erfassen des Einfalls zumindest eines Steuerelements in einem Reaktorkern bekannt, bei dem die Signale von entlang des Fallweges des Steuerelements angeordneten Detektoren aufsummiert und einer Überwachungs- respektive Auswerteeinrichtung zugeführt werden, wobei sich der Summenbildung eine Mittelwertbildung unmittelbar anschließt.

Der Erfindung liegt die Aufgabe zugrunde, ein Verfahren anzugeben, das auf Basis vorhandener Detektoranordnungen eine gegenüber dem Stand der Technik verbesserte Fehlererkennung bei Steuerelementeinfällen in einem Reaktorkern zuläßt. Eine weitere Aufgabe sieht vor, eine hierzu geeignete Anordnung anzugeben.

Die Aufgabe wird erfindungsgemäß gelöst mit einem Verfahren zum Erfassen des Einfalls zumindest eines Steuerelements in einen Reaktorkern, bei dem Signale von entlang des Fallweges des Steuerelements angeordneten Detektoren aufsummiert und einer Überwachungseinrichtung zugeführt werden, wobei die jeweiligen Signale vor der Summierung jeweils mit einer zur Fallzeit proportionalen Verzögerungszeit verzögert und kohärent aufsummiert werden.

Auf diese Weise ist eine verbesserte Erfassung eines Einfalls gegenüber dem Stand der Technik möglich. Die jeweiligen Signale werden nämlich aufgrund der Verzögerungen kohärent aufsummiert, wodurch Stör- und Rauschanteile sich teils aufheben oder wegmitteln. Die amplitude des Summensignals ist dann gleich der Summe der Einzelsignale, so daß der Rauschanteil im Verhältnis gering ist. Die Fehlererkennung ist dadurch besonders zuverlässig. Es wird also für die zusammengehörigen Signale eines Ereignisses eine zeitliche Koinzidenz hergestellt.

Die jeweiligen Verzögerungszeiten können fest vorgegeben sein. Dadurch ist die Ausbildung der Verzögerungsglieder sehr einfach, wobei der Gesamtaufwand niedrig ist.

Mit Vorteil kann die Verzögerung in Abhängigkeit von der jeweiligen Zeitdifferenz zwischen dem Auftreten des jeweiligen Signals und dem des letzten Signals erfolgen. Damit ist eine Verzögerung gegeben, die vom Fallen des Steuerelements abhängig ist. Die Fehlererfassung ist dadurch sehr genau. Die Verzögerungszeit kann zum Beispiel nach der Beziehung

$$T_i = X_n/v - X_i/v$$

ermittelt werden, wobei für $i = 1,...,n-1$

| | |
|---|---|
| $X_i$ und $X_n$ | die Positionen der jeweiligen Detektoren 1 bzw. n entlang des Fallweges der Steuerelemente, |
| $T_i$ | die Verzögerungszeiten der jeweiligen Signale $X_i$ bzw. $X_n$ und |
| $v$ | die Fallgeschwindigkeit der Steuerelemente |

bedeuten. Damit ist eine einfache Regel gegeben, nach der die Verzögerungszeiten in den Verzögerungsgliedern berechnet werden können.

Die Verzögerungszeiten können auch durch eine Korrelationsanalyse ermittelt werden, wodurch eine genaue Koinzidenz der Signale erzielt ist.

Weiter ist es günstig, wenn die jeweilige Verzögerungszeit in Abhängigkeit von der Ausgangsposition des Steuerelements vor dem Einfall ermittelt wird. Damit ist in jeder Betriebsposition des Steuerelements eine koinzidente Überwachung möglich. Der momentane Betriebszustand wird also berücksichtigt. Es werden dadurch die unterschiedlichen Fallzeiten exakt berücksichtigt, wodurch eine hohe Genauigkeit bei der Fehlerkennung erzielt ist.

Eine günstige Variante ist gegeben, wenn die Signale vor der Summierung einer Grenzwertbearbeitung zugeführt werden, wodurch nur Signale, die einen vorgegebenen Grenzwert überschreiten, aufsummiert werden. Damit kommen nur Signale mit einer vorgegebenen Signalhöhe zur Auswertung, wodurch beispielsweise eine Unterscheidung zwischen einem schnellen Einfahren des Steuerelements und einem fehlerbedingten Einfallen erfolgen kann.

Die Signale können bei der Grenzwertbearbeitung mit Vorteil in binäre Signale umgewandelt werden, wodurch eine einfachere Auswertbarkeit gegenüber einem analogen Signalverlauf -auch in digitalisierter Form- gegeben ist.

Die von den Detektoren erzeugten Signale können mit Vorteil vor ihrer weiteren Verarbeitung auch zunächst differenziert werden. Auf diese Weise steht statt einem Flankensignal ein Impuls zur Verfügung, der eine signaltechnisch günstige Verarbeitung gestattet.

Eine alternative Lösung der Aufgabe ist erfindungsgemäß gegeben mit einem Verfahren zum Erfassen des Einfalles zumindest eines Steuerelements in einen Reaktorkern, bei dem Signale von entlang des Fallweges des Steuerelements angeordneten Detektoren erfaßt und einer Überwachungseinrichtung zugeführt werden, wobei die Signale der Detektoren Grenzwertgliedern zugeführt werden, deren binäre Ausgangssignale derart zeitlich verzögert werden, daß sie etwa zeitgleich liegen, und wobei die verzögerten binären Ausgangssignale einer Koinzidenz-Überwachungseinrichtung zur Erkennung eines Steuerelementeinfalls zugeführt werden. Damit ist eine hochgenaue Fehlererfassung möglich, die sich insbesondere für eine digitale Signalverarbeitung mit einem Rechner, z.B. in einer leittechnischen Einrichtung mit Mikrocomputer, eignet.

Eine weitere Lösung der Aufgabe ist erfindungsgemäß gegeben durch ein Verfahren zum Erfassen des Einfalls eines Steuerelements in einen Reaktorkern, bei dem Signale von entlang des Fallweges des Steuerelements angeordneten Detektoren aufsummiert und integriert werden sowie einer Überwachungseinrichtung zugeführt werden, wobei das integrierte Summensignal zunächst einer Differenzierstufe und dann der Überwachungseinrichtung zugeführt wird. Diese Lösung ist sehr einfach und bietet gegenüber dem Stand der Technik eine verbesserte Fehlererkennung und Signalauswertung.

Die Lösung der weiteren Aufgabe gelingt erfindungsgemäß mit einer Anordnung zur Durchführung des obengenannten Verfahrens, mit entlang des Fallweges zumindest eines Steuerelements eines Reaktorkerns angeordneten Detektoren, die mit ihren Signalausgängen mit einem gemeinsamen Summierglied verbunden sind, welches ausgangsseitig auf eine Überwachungseinrichtung geschaltet ist, wobei zwischen der Mehrzahl der Detektoren des Steuerelements und dem Sommlerglied jeweils ein Verzögerungsglied mit einer zur Fallzeit proportionalen Verzögerungszeit geschaltet ist. Mit dieser Anordnung ist gegenüber dem Stand der Technik eine koinzidente Überwachung der Signale möglich, was zu einer zuverlässigen Fehlerüberwachung im Reaktorkern führt.

Es ist günstig, wenn zwischen den jeweiligen Detektoren und dem Summierglied jeweils ein Differenzierglied geschaltet ist. Damit stehen als Signale Impulse zur Verfügung, die eine günstige koinzidente Signalverarbeitung zulassen.

Zwischen den jeweiligen Detektoren und dem Summierglied kann jeweils ein Grenzwertglied geschaltet sein. Damit kommen nur Signale, die eindeutig von einem Steuerelementeinfall herrühren, zur Verarbeitung. Einfallende Steuerelemente weisen nämlich eine hohe Fallgeschwindigkeit auf, die eine höhere Signalhöhe als bei Normalbewegungen der Steuerelemente zur Folge haben. Darüber hinaus können für alternative Verfahren weitere alternative Anordnungen vorgesehen sein.

Mit Vorteil sind die jeweiligen Signalverarbeitungsglieder und/oder die Überwachungseinrichtung von einem oder mehreren Rechnern mit Programm gebildet. Auf diese Weise ist eine sichere Störungsüberwachung gegeben, die schnell ist und gegebenenfalls mit einem vorhandenen Rechner mit allen Vorteilen der digitalen Signalverarbeitung realisiert werden kann.

Die Erfindung, weitere Details und Vorteile werden nachfolgend in Ausführungsbeispielen anhand der Zeichnung näher erläutert. Es zeigen:

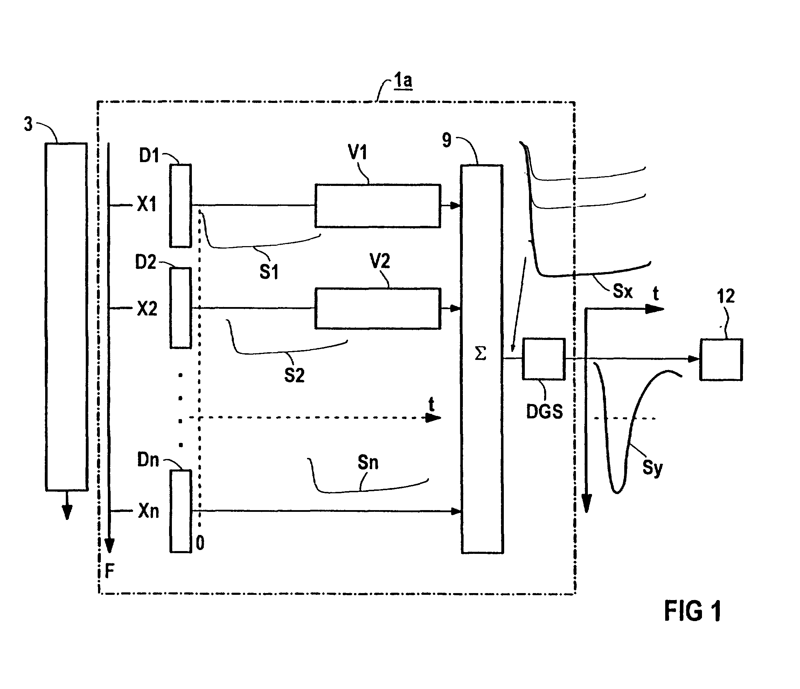

FIG 1 bis 4     vier alternative Ausführungsbeispiele in Prinzipdarstellung für Anordnungen zum Erfassen von Steuerelementeinfällen.

FIG 1 zeigt eine erste Anordnung 1a, mit deren Hilfe ein Einfall eines Steuerelements 3 in einen nicht näher gezeigten Reaktorkern erfaßt werden kann (bevorzugte Ausführungsform). Entlang des Fallweges F des Steuerelements 3 (oder einer Steuerelementgruppe) sind in vorgegebenen Abständen Detektoren D1 bis Dn in den Positionen X1 bis Xn angeordnet. Die Anzahl und Abstände der Detektoren D1 bis Dn sind im wesentlichen von der gewünschten Erfassungsgenauigkeit und vom vertretbaren Aufwand abhängig. Der Einfachheit halber sind in den Figuren lediglich drei Detektoren D1, D2 und Dn gezeigt. Vorliegend ist rein beispielhaft die Verfahrensweise am Beispiel eines Steuerelements 3 gezeigt. Sie gilt für mehrere Steuerelemente 3 oder für alle Steuerelemente 3 eines Reaktorkerns sinngemäß.

Die Detektoren D1 bis Dn können auf verschiedenste Art und Weise ausgebildet sein. Sie können beispielsweise auf Radioaktivität, Wärme, elektromagnetische Wirkungen oder auf sonstige physikalische Wirkungen ansprechen. Wesentlich ist dabei, daß sie an ihrem Einbauort das Einfallen des jeweiligen Steuerelements 3 über eine physikalische Wirkung erfassen und ein entsprechendes Signal abgeben.

Folgende aus der Praxis bekannten Detektor-Typen kommen insbesondere zur Anwendung: Neutronen-Fluß-, Gamma-, Beta-, Alpha-Detektoren und Meßfühler oder Thermoelemente der lokalen Kühlmittel-Temperatur. Zweckmäßigerweise werden für die vorliegende Funktion die ohnehin im oder außerhalb des Reaktorkerns angeordneten Detektoren D1 bis Dn verwendet. Dies können beispielhaft Detektoren D1 bis Dn zur Bestimmung der Leistungsdichte sein. Mit S1 bis Sn sind in den Figuren die jeweils von den Detektoren D1 bis Dn abgegebenen Signale bezeichnet.

Beim Einfallen des Steuerelements 3 von oben nach unten erzeugen die Detektoren D1 bis Dn nacheinander - jeweils bei dem Passieren des Steuerelements 3 - Signale S1 bis Sn mit Signalflanken. Die Flanken (Anstiegsflanken) der Signale S1 bis Sn treten also nacheinander mit einer Zeitverzögerung auf.

Die Darstellung der Signalflanken der Signale S1 bis Sn ist in den Figuren entsprechend ihrer zeitlichen Verzögerung in der Zeitachse t (strichliert) gewählt. Vorliegend wird davon ausgegangen, daß die Detektoren D1 bis Dn jeweils ein Gleichsignal abgeben. Die gezeigten Signale S1 bis Sn sind daher beispielhaft als Gleichsignale mit Anstiegsflanke ausgebildet. Andere Signalarten, z.B. Wechselsignale, sind ebenfalls denkbar.

Die Signale S1 und S2 werden nun nachfolgend mit Verzögerungsgliedern V1 und V2 derart verzögert, daß ihre Flanken etwa zeitgleich mit der Flanke des Signals Sn liegen. Es findet also eine relative Verzögerung gegenüber dem Signal Sn statt. Bei n-Detektoren Dn erhalten die Detektoren D1 bis Dn-1 (nicht gezeigt) ein Verzögerungsglied V1 bis Vn-1 (nicht gezeigt). Nach der Summation im Summierglied 9 ergibt sich dann ein Summensignal Sx, das eine große steile Anstiegsflanke aufweist. Um eine bessere Verarbeitbarkeit des Summensignals Sx zu erhalten, kann dieses nachfolgend noch über ein Differenzierglied DGs geführt sein, so daß ein Impulssummensignal Sy gegeben ist, das dann einer Überwachungseinrichtung 12 zugeführt wird.

Die Überwachungseinrichtung 12 dient beispielsweise zur Fehlerfassung, -verarbeitung, -signalisierung oder zur Datenübertragung und ist nach dem allgemein bekannten Stand der Technik ausgeführt. Sie kann weitere Reaktionen auf den Einfall auslösen und ist in die Steuerung oder Leittechnik des Reaktors eingebunden.

Durch die etwa zeitgleiche Summierung der jeweiligen Signale S1 bis Sn tritt eine gegenüber den Störsignalen erhebliche Erhöhung des Nutzsignalanteils ein, so daß eine verbesserte Auswertung gegeben ist. Rauschanteile im Störsignal heben sich dabei zumindest teilweise auf, so daß eine bessere Erkennbarkeit des Einfallens durch die nachfolgende Überwachungseinrichtung 12 gegeben ist.

Die Verzögerungszeit in den Verzögerungsgliedern V1, V2 kann entsprechend den Einbauorten der Detektoren D1 bis Dn fest vorgegeben sein. Die Ermittlung der Verzögerungszeiten kann dann durch Versuche oder aufgrund theoretischer Überlegungen erfolgen. Diese Verfahrensweise kann beispielsweise mit einer analogen oder digitalen Schaltung, insbesondere einem Rechner, realisiert werden.

Die Signale S1 bis Sn können jedoch auch zunächst jeweils abgespeichert werden. Die jeweilige Verzögerungszeit ergibt sich dann aus der Differenz zwischen dem Auftreten des jeweiligen Signals S1 bis Sn und dem letzten Signal Sn. Diese Verfahrensweise eignet sich insbesondere für eine digitale Signalverarbeitung mit einem Rechner.

Die Verzögerungszeiten der jeweiligen Verzögerungsglieder V1 bis Vn-1 (nicht gezeigt) können gemäß der nachfolgenden Beziehung berechnet werden:

$$T_i = X_n/v - X_i/v.$$

Darin bedeuten für i = 1,..., n-1:

$X_i$ und $X_n$    die Positionen der jeweiligen Detektoren D1 bzw. Dn entlang des Fallweges der Steuerelemente 3,

$T_i$         die Verzögerungszeiten der jeweiligen Signale S1 bis Sn der Detektoren D1 bis Dn an den Positionen $X_i$ bzw. $X_n$ und

$v$          die Fallgeschwindigkeit des jeweiligen Steuerelements 3.

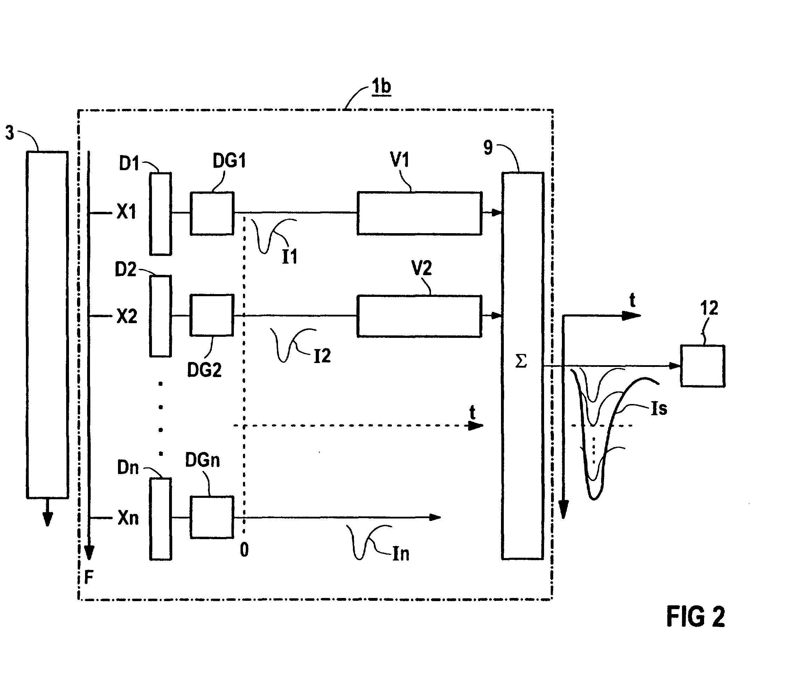

FIG 2 zeigt eine zweite Variante bei der die Anordnung 1b in jedem Signalzweig der Detektoren D1 bis Dn ein Differenzierglied DG1 bis DGn aufweist, die den jeweiligen Detektoren D1 bis Dn nachgeschaltet sind. Die Flanken der Signale der Detektoren D1 bis Dn werden dadurch in Impulse I1 bis In umgeformt, die signaltechnisch gut zu verarbeiten sind. Nach der Summation ergibt sich ein Summenimpuls Is.

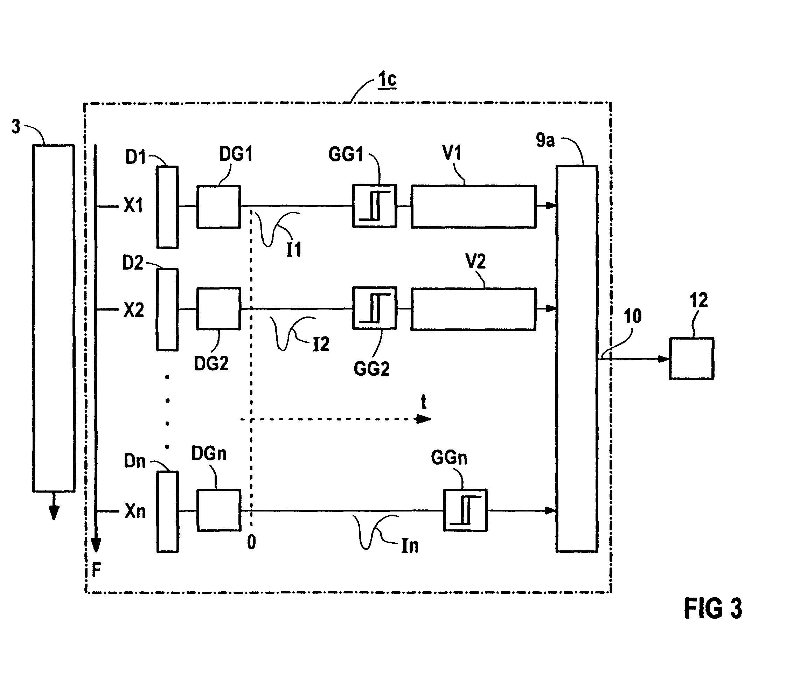

Bei der Ausführung 1c gemäß FIG 3 sind den Differenziergliedern DG1 bis DGn Schwellwertglieder GG1 bis GGn nachgeschaltet. Auf diese Weise kommen nur solche Signale zur Auswertung und Verzögerung, die eine vorgegebene Höhe aufweisen. Die Höhe ist dabei von der Geschwindigkeit des Einfallens abhängig. Ein langsam in den Reaktorkern eingefahrener Steuerstab führt daher nicht zu einem erfaßten Signal.

Die Ausführung lc gemäß FIG 3 kann auch derartig ausgeführt sein, daß die Grenzwertglieder GG1 bis GGn binäre Signale abgeben. Nach der Verzögerung der binären Signale durch die Verzögerungsglieder V1 und V2 werden die binären Signale dann einer Koinzidenz-Überwachungseinrichtung 9a zugeführt. Diese führt dann eine logische Überprüfung der Binärsignale durch, wodurch das Einfallen des Steuerelements 3 erfaßt wird.

Die Koinzidenz-Überwachungseinrichtung 9a gibt dann an ihrem Ausgang 10 ein Fehlererkennungssignal ab, das der bereits oben beschriebenen Überwachungseinrichtung 12 zugeführt wird. Die Ausführung lc eignet sich insbesondere für eine digitale Signalverarbeitung, wobei die Ausgänge der Detektoren D1 bis Dn an Eingänge einer Automatisierungseinrichtung mit Rechner geschaltet sind. Die aufgezeigten Signalverarbeitungsglieder sind dann im Rahmen von Software oder Programmen realisiert.

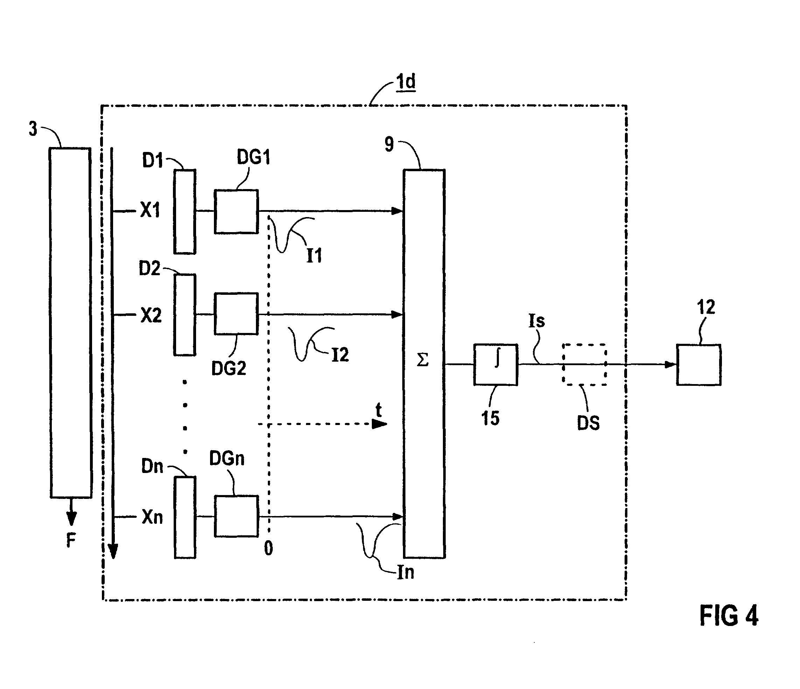

In Einzelfällen kann unter bestimmten Bedingungen auch eine einfache Erfassung gemäß FIG 4 ausreichend sein. Dabei werden die Impulssignale I1 bis In zunächst aufsummiert und dann mit Hilfe eines Integrators 15 zeitlich integriert. Es ergibt sich dadurch ein Summenimpuls Is, der gegenüber dem Stand der Technik auch schon zu einer verbesserten Auswertung und Erfassung führt. Wahlweise kann dieses Signal dann noch nachfolgend einer Differenzierstufe DS zugeführt werden, wodurch ein charakteristischer Impuls zur Verfügung steht, der ein gutes Nutzsignalverhältnis aufweist.

Zusätzlich ist es auch denkbar, daß die Signale vor ihrer weiteren Verarbeitung in einer Logik überprüft werden, um bestimmte Fehlersituationen zu erkennen oder um eine weitere Bearbeitung aufgrund von Fehlinformationen zu unterbinden. Eine derartige logische Überprüfung der Signale eignet sich ebenfalls für eine Ausführung mit einem Rechner.

Selbstverständlich sind beliebige Kombinationen der obengenannten Merkmale im Rahmen des fachmännischen Könnens denkbar, ohne daß der Grundgedanke der vorliegenden Idee verlassen wird.

**Patentansprüche**

1. Verfahren zum Erfassen des Einfalls zumindest eines Steuerelements (3) in einen Reaktorkern, bei dem Signale (S1 bis Sn) von entlang des Fallweges (F) des Steuerelements (3) angeordneten Detektoren (D1 bis Dn) aufsummiert und einer Überwachungseinrichtung (12) zugeführt werden, **dadurch gekennzeichnet**, daß die jeweiligen Signale (S1 bis Sn) jeweils mit einer zur Fallzeit proportionalen Verzögerungszeit verzögert und kohärent aufsummiert werden.

2. Verfahren nach Anspruch 1, **dadurch gekennzeichnet**, daß die jeweilige Verzögerungszeit für die jeweiligen Signale (S1 bis Sn) fest vorgegeben ist.

3. Verfahren nach Anspruch 1, **dadurch gekennzeichnet**, daß die jeweilige Verzögerungszeit in Abhängigkeit von der Ausgangsposition des jeweiligen Steuerelements (3) vor dem Einfall ermittelt wird.

4. Verfahren nach Anspruch 1 oder 3, **dadurch gekennzeichnet**, daß die Verzögerunpszeit aus der jeweiligen Zeitdifferenz zwischen dem Auftreten des jeweiligen Signals (S1,S2) und dem des letzten Signals (Sn) ermittelt wird.

5. Verfahren nach Anspruch 1, 3 oder 4, **dadurch gekennzeichnet**, daß die Verzögerungszeit durch eine Korrelationsanalyse ermittelt wird.

6. Verfahren nach einem der Ansprüche 1 bis 5, **dadurch gekennzeichnet**, daß die von den Detektoren (D1 bis Dn) erzeugten Signale (S1 bis Sn) vor ihrer weiteren Verarbeitung zunächst differenziert werden.

7. Verfahren nach einem der Ansprüche 1 bis 6, **dadurch gekennzeichnet**, daß die Signale (S1 bis Sn) vor der Summierung einer Grenzwertbearbeitung zugeführt werden, so daß nur Signale (S1 bis Sn), die einen vorgegebenen Grenzwert überschreiten, aufsummiert werden.

8. Verfahren nach Anspruch 7, **dadurch gekennzeichnet**, daß die Signale (S1 bis Sn) bei der Grenzwertbearbeitung in binäre Signale umgewandelt werden.

9. Verfahren nach Anspruch 1, **dadurch gekennzeichnet**, daß die Signale (S1 bis Sn) der Detektoren (D1 bis Dn) vor der zeitlichen Verzögerung Grenzwertgliedern (GG1 bis GGN) zugeführt werden, deren binäre Ausgangssignale derart zeitlich verzögert werden, daß sie etwa zeitgleich liegen, und die verzögerten binären Ausgangssignale einer Koinzidenz-Überwachungseinrichtung (9a) zur Erkennung eines Steuerelementeinfalls zugeführt werden.

10. Anordnung zur Durchführung des Verfahrens nach einem der Ansprüche 1 bis 8, mit entlang des Fallweges (F) zumindest eines Steuerelements (3) eines Reaktorkerns angeordneten Detektoren (D1 bis Dn), die mit ihren Signalausgängen mit einem gemeinsamen Summierglied (9) verbunden sind, welches ausgangsseitig auf eine Überwachungseinrichtung (12) geschaltet ist, wobei zwischen der Mehrzahl der Detektoren (D1,D2) des Steuerelements (3) und dem Summierglied (9) jeweils ein Verzögerungsglied (V1,V2) mit einer zur Fallzeit proportionalen Verzögerungszeit geschaltet ist.

**11.** Anordnung nach Anspruch 10, wobei zwischen den jeweiligen Detektoren (D1 bis Dn) und dem Summierglied (9) jeweils ein Differenzierglied (DG1 bis DGn) geschaltet ist.

**12.** Anordnung nach Anspruch 10 oder 11, wobei zwischen den jeweiligen Detektoren (D1 bis Dn) und dem Summierglied (9) jeweils ein Grenzwertglied (GG1 bis GGn) geschaltet ist.

**13.** Anordnung nach Anspruch 10, 11 oder 12, wobei die jeweiligen Signalverarbeitungsglieder und/oder die Überwachungseinrichtung (12) von einem oder mehreren Rechnern mit Programm gebildet sind.

**Claims**

**1.** Method for detecting the drop of at least one control element (3) into a reactor core, wherein signals (S1 to Sn) from detectors (D1 to Dn) arranged along the fall path (F) of the control element (3) are added up and fed to a monitoring device (12),
characterised in that the respective signals (S1 to Sn) are, in each case, delayed by a delay time that is proportional to the fall time and are added up in a coherent manner.

**2.** Method according to claim 1, characterised in that the respective delay time for the respective signals (S1 to Sn) is fixed in advance.

**3.** Method according to claim 1, characterised in that the respective delay time is determined as a function of the starting position of the respective control element (3) before the drop.

**4.** Method according to claim 1 or 3,
characterised in that the delay time is determined from the respective time difference between the occurrence of the respective signal (S1, S2) and that of the last signal (Sn).

**5.** Method according to claim 1, 3 or 4,
characterised in that the delay time is determined by means of a correlation analysis.

**6.** Method according to one of claims 1 to 5,
characterised in that the signals (S1 to Sn) which are generated by the detectors (D1 to Dn) are first differentiated before being processed further.

**7.** Method according to one of claims 1 to 6,
characterised in that the signals (S1 to Sn) are fed to a limit-value processing operation before being added so that only signals (S1 to Sn) which exceed a given limit value are added up.

**8.** Method according to claim 7, characterised in that the signals (S1 to Sn) are converted into binary signals during the limit-value processing operation.

**9.** Method according to claim 1, characterised in that before the time delay the signals (S1 to Sn) of the detectors (D1 to Dn) are fed to limit-value elements (GG1 to GGN), the binary output signals of which are delayed with respect to time in such a way that they are substantially simultaneous and the delayed binary output signals are fed to a coincidence-monitoring device (9a) for recognition of a control-element drop.

**10.** Arrangement for carrying out the method according to one of claims 1 to 8, having detectors (D1 to Dn) which are arranged along the fall path (F) of at least one control element (3) of a reactor core and the signal outputs of which are connected to a common adding element (9) which on the output side is connected to a monitoring device (12), wherein a respective delay element (V1, V2) having a delay time that is proportional to the fall time is connected between the plurality of detectors (D1, D2) of the control element (3) and the adding element (9).

**11.** Arrangement according to claim 10, wherein a differentiating element (DG1 to DGn) is connected, in each case, between the respective detectors (D1 to Dn) and the adding element (9).

**12.** Arrangement according to claim 10 or 11, wherein a limit-value element (GG1 to GGn) is connected, in each case, between the respective detectors (D1 to Dn) and the adding element (9).

**13.** Arrangement according to claim 10, 11 or 12, wherein the respective signal-processing elements and/or the monitoring device (12) are formed by one or more programmed computers.

**Revendications**

**1.** Procédé de détection de la chute d'au moins un élément de commande (3) dans un coeur de réacteur, dans lequel on additionne des signaux (S1 à Sn) de détecteurs (D1 à Dn) disposés le long de la trajectoire de chute (F) de l'élément de commande (3) et on les envoie à un dispositif de surveillance (12),
caractérisé par le fait qu'on retarde les signaux respectifs (S1 à Sn) à chaque fois d'un retard proportionnel au temps de chute et qu'on les additionne de manière cohérente.

**2.** Procédé selon la revendication 1,
caractérisé par le fait que l'on prescrit un retard respectif constant pour les signaux respectifs (S1 à Sn).

**3.** Procédé selon la revendication 1, caractérisé par le fait qu'on détermine le retard respectif en fonction de la position initiale de l'élément de commande respectif (3) avant la chute.

**4.** Procédé selon la revendication 1 ou 3, caractérisé par le fait qu'on détermine le retard à partir de la différence de temps respective entre l'apparition du signal respectif (S1, S2) et l'apparition du dernier signal (Sn).

**5.** Procédé selon la revendication 1, 3 ou 4, caractérisé par le fait qu'on détermine le retard au moyen d'une analyse de corrélation.

**6.** Procédé selon l'une des revendications 1 à 5, caractérisé par le fait que, avant de continuer à les traiter, on différentie d'abord les signaux (S1 à Sn) produits par les détecteurs (D1 à Dn).

**7.** Procédé selon l'une des revendications 1 à 6, caractérisé par le fait que, avant de les additionner, on envoie les signaux (S1 à Sn) à un traitement à valeur limite de façon à n'additionner que des signaux (S1 à Sn) qui dépassent une valeur limite prescrite.

**8.** Procédé selon la revendication 7, caractérisé par le fait que, lors du traitement à valeur limite, on transforme les signaux (S1 à Sn) en signaux binaires.

**9.** Procédé selon la revendication 1, caractérisé par le fait que, avant de les retarder, on envoie les signaux (S1 à Sn) des détecteurs (D1 à Dn) à des éléments à valeur limite (GG1 à GGn) dont les signaux de sortie binaires sont retardés de telle sorte qu'ils soient à peu près simultanés, et qu'on envoie les signaux de sortie binaires retardés à un dispositif de surveillance de coïncidence (9a) pour la détection d'une chute d'élément de commande.

**10.** Dispositif pour la mise en oeuvre du procédé selon l'une des revendications 1 à 8, comportant des détecteurs (D1 à Dn) disposés le long de la trajectoire de chute (F) d'au moins un élément de commande (3) d'un coeur de réacteur et reliés par leurs sorties de signaux à un élément additionneur commun (9) qui est branché en sortie sur un dispositif de surveillance (12), un élément de retardement (V1, V2) au retard proportionnel au temps de chute étant branché à chaque fois entre la multiplicité des détecteurs (D1, D2) de l'élément de commande (3) et l'élément additionneur (9).

**11.** Dispositif selon la revendication 10, dans lequel un élément différentiateur (DG1 à DGn) est branché à chaque fois entre les détecteurs respectifs (D1 à Dn) et l'élément additionneur (9).

**12.** Dispositif selon la revendication 10 ou 11, dans lequel un élément à valeur limite (GG1 à GGn) est branché à chaque fois entre les détecteurs respectifs (D1 à Dn) et l'élément additionneur (9).

**13.** Dispositif selon la revendication 10, 11 ou 12, dans lequel les éléments de traitement de signal respectifs et/ou le dispositif de surveillance (12) sont formés par un ou plusieurs ordinateurs avec des programmes.

FIG 1

EP 0 852 058 B1

FIG 2

EP 0 852 058 B1

FIG 3

**FIG 4**